## Europäisches Patentamt

(19) **European Patent Office**

**Office européen des brevets**

(11) Numéro de publication: **0 112 953**

**B1**

(12) ## FASCICULE DE BREVET EUROPÉEN

(45) Date de publication du fascicule du brevet: 08.04.87

(51) Int. Cl.⁴: **H 04 J 3/16**

(21) Numéro de dépôt: **82430049.5**

(22) Date de dépôt: **28.12.82**

(54) **Procédé d'affectation dynamique de vitesses dans un système de transmission multiplex.**

(43) Date de publication de la demande:
**11.07.84 Bulletin 84/28**

(45) Mention de la délivrance du brevet:
**08.04.87 Bulletin 87/15**

(84) Etats contractants désignés:
**DE FR GB**

(56) Documents cité:
**EP-A-0 064 120**
**US-A-4 270 202**

**INTERNATIONAL CONFERENCE ON COMMUNICATIONS, 14-16 juin 1971, Montreal, pages 39-27 - 39-32, IEEE, New York, USA, D.R. DOLL: "The design of optimal synchronous time division multiplexors"**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Caron, François Gabriel Emile, 21 Domaine de la Quiétude, F-06800 Cagnes- sur- Mer (FR)**

(74) Mandataire: **Bonin, Jean- Jacques, Compagnie IBM France Département de Propriété Intellectuelle, F-06610 La Gaude (FR)**

LIBER, STOCKHOLM 1987

**0 112 953**

## Description

La présente invention concerne les systèmes de transmission dans lesquels des terminaux ou lignes d'un premier groupe peuvent être connectés à des terminaux ou lignes d'un second groupe par l'intermédiaire d'un canal de transmission commun multiplex. Elle concerne plus particulièrement les systèmes de ce type dans lesquels ces terminaux ou lignes peuvent fonctionner à un certain nombre de vitesses de transmission différentes et dans lesquels sont prévus des moyens pour opérer une certaine sélection de ces différentes vitesses tout en tenant compte à la fois des caractéristiques propres à ces terminaux ou lignes et de la vitesse maximale admissible dans le canal de transmission commun.

Dans les systèmes connus de l'art antérieur cette sélection était opérée manuellement, c'est-à-dire qu'à une extrémité au moins du canal multiplex un opérateur était obligé de sélectionner manuellement la configuration de vitesses voulue, celle-ci étant transmise automatiquement à l'autre extrémité du canal. Mais alors cette configuration restait fixe jusqu'à l'intervention manuelle suivante. L'inconvénient majeur de cet agencement était soit de nécessiter de nombreuses interventions de l'opérateur, soit de fonctionner avec un rendement médiocre, le canal multiplex n'étant pas, une grande partie du temps, utilisé au maximum de ses possibilités.

Les systèmes de l'art antérieur peuvent être illustrés par le document EP-A-0 064 120 et l'article de D.R. DOLL intitulé "The design of optimal synchronous time division multiplexors", paru dans International Conference on Communications, 14-16 Juin 1871, IEEE, New York, U.S.A.

La présente invention a pour objet un procédé applicable aux systèmes de transmission du type général mentionné plus haut, selon lequel les vitesses de transmission sont automatiquement et dynamiquement affectées à chacun des interfaces du canal commun en fonction des caractéristiques et du trafic des lignes ou terminaux qui y sont connectés, de façon à optimiser la quantité globale d'information par unité de temps transmise par le canal commun. Une telle optimisation peut conduire dans certain cas à une amélioration du rendement de la voie de transmission par un facteur deux.

Conformément à un aspect de l'invention, on effectue tout d'abord périodiquement une estimation du trafic de données sur chacun des interfaces à vitesse libre.

Cette estimation se fait à partir de la formule suivante:

$$T^n_i = \beta F^n_i + (1-\beta) T^{n-1}_i$$

dans laquelle:

$T^n_i$ est l'estimation du trafic entre les instans $t_{n-1}$ et $t_n$,

$\beta$ est un coefficient compris entre 0 et 1,

$T_i^{n-1}$ est l'estimation du trafic entre les instants $t_{n-2}$ et $t_{n-1}$,

$F^n_i$ est donné par la formule:

$$F^n_i = b^n_i \left[ \alpha + (1-\alpha) \frac{V_M}{V_i} \right]$$

dans laquelle:

$b^n_i$ est le nombre de bits "0" transmis par l'interface considéré i entre les instants $t_{n-1}$ et $t_n$,

$\alpha$ est un coefficient compris entre 0 et 1,

$V_M$ est la vitesse de l'interface fonctionnant à la vitesse la plus élevée, et

$V_i$ est la vitesse présente de l'interface considéré i.

Une fois que l'estimation du trafic a été effectuée pour chacun des interfaces à vitesse libre on détermine une hiérarchie des estimations de trafics $T^n_i \ldots T^n_h$ ainsi qu'une hiérarchie des vitesses libres. Ensuite on établit une relation entre les différents trafics estimés et les différentes vitesses libres, et on effectue l'attribution des vitesses de façon que, pour chaque interface, l'écart entre le trafic estimé et la vitesse attribuée soit minimal, et que la somme des vitesses attribuées sont toujours égale à la somme des vitesses libres initiales.

En se référant aux dessins annexés, on va maintenir décrire à titre d'exemple, un mode de réalisation préféré de l'invention.

Sur les dessins:

La figure 1 représente schématiquement un système de transmission auquel peut s'appliquer la présente invention.

La figure 2 représente schématiquement une organisation générale des circuits de contrôle du système de la figure 1.

La figure 3 représente schématiquement un circuit logique permettant de calculer l'estimation du trafic de données sur un interface conformément à l'invention.

Les figures 4 et 5 représentent schématiquement un circuit logique permettant de déterminer la configuration de vitesses optimale pour chaque interface.

La figure 6 représente plus en détails la configuration du circuit 56 représenté schématiquement à la figure 4.

La figure 7 représente schématiquement les impulsions de chronologie délivrées par les circuits $H_1$ et $H_2$ des figures 4 et 5.

La figure 8 montre un exemple de chaîne à 18 bits représentant une configuration particulière de vitesses attribuée selon l'invention.

La figure 9 montre schématiquement la répartition des informations binaires transmises à chaque instant de signalisation dans l'exemple de configuration de vitesses de la figure 8.

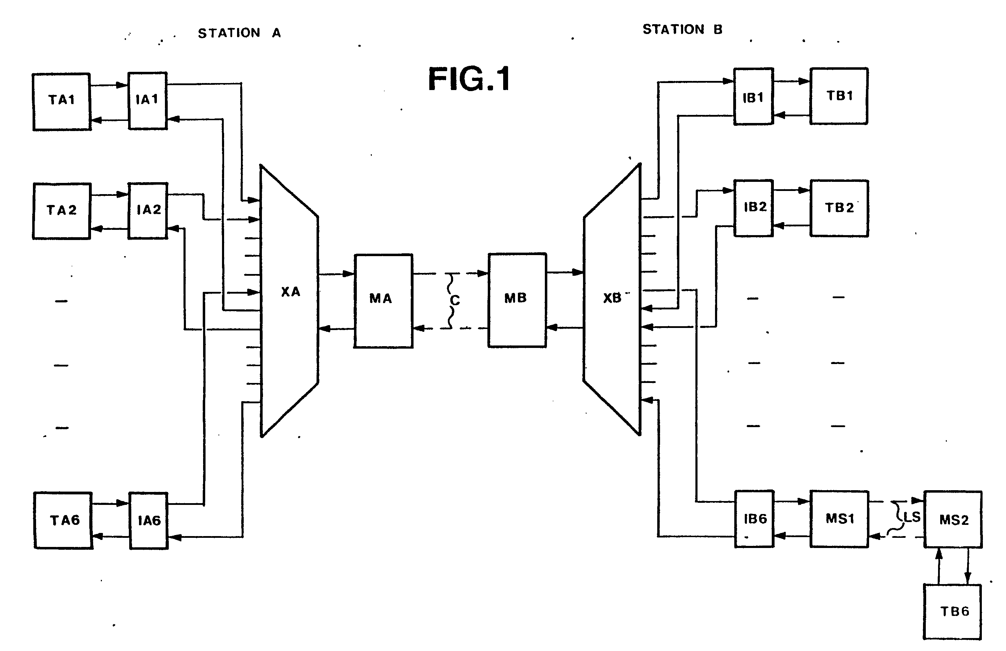

La figure 1 représente très schématiquement une configuration générale de réseau de transmission auquel peut être appliquée la présente invention.

Le réseau de la figure 1 comporte deux stations éloignées A et B reliées par un canal de transmission

2

commun C. Les terminaux TA1, TA2, ..., TA6 de la station A sont connectés au canal commun C par l'intermédiaire d'interfaces IA1, IA2, ..., IA6, d'un multiplexeur/démultiplexeur XA et d'un modem MA. De même les terminaux TB1, TB2, ..., TB6 de la station B sont connectés au canal de transmission commun C par l'intermédiaire d'interfaces IB1, IB2, ..., IB6, d'un multiplexeur/démultiplexeu XB et d'un modem MB. Le terminal TB6 n'est pas directement relié au multiplexeur/démultiplexeur XB comme le sont les terminaux TB1 et TB2, il est relié par l'intermédiaire de deux modems MS1, MS2 et une ligne de transmission secondaire LS, l'ensemble constituant un réseau secondaire.

Il est à noter que toutes les lignes de transmission représentées sont unidirectionnelles et que les vitesses de transmission peuvent très bien être différentes, pour un même interface dans les deux sens de transmission.

De plus, il va de soi qu'on a schématisé un système à six interfaces pour fixer les idées, mais le nombre d'interfaces maximal admissible peut être différent et variera notamment en fonction de la vitesse maximale du canal commun C et de la vitesse minimale des terminaux. Par exemple un système où le canal commun peut fonctionner à 14400 bits par seconde (BPS) où la vitesse des terminaux ne descend pas au-dessous de 2400 BPS et peut varier par incréments de 2400 BPS, acceptera au maximum six interfaces.

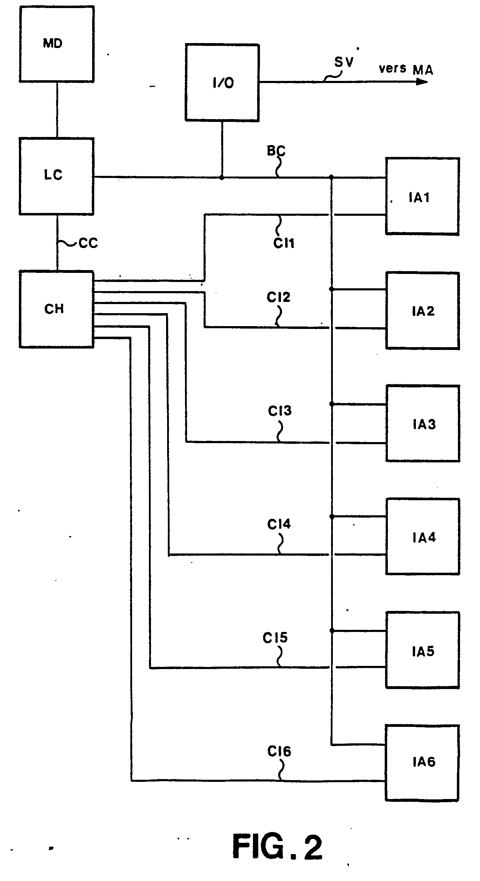

Sur la figure 2, on a très schématiquement montré un organisation générale des circuits de contrôle du système au niveau d'une station, A par exemple.

La station fonctionne sous la commande d'une logique de contrôle LC qui peut être par exemple un microprocesseur, une mémoire de données MD et un module de commande de chronologie CH.

La logique de contrôle LC est connectée aux divers interfaces IA1, IA2, ..., IA6 par un bus de contrôle BC, pour effectuer tous les tests et commandes nécessaires à la transmission des données. Elle contrôle également l'envoi et la réception des messages de supervision échangés par les deux stations par l'intermédiaire de l'unité d'entrée/sortie I/O qui est connectée au modem MA (non représenté, voir figure 1) par une ligne SV. Hormis les opérations particulières liées à la présente invention et qui seront décrites en détail plus loin, la logique LC effectue toutes les opérations de commandes et de supervision nécessitées par le fonctionnement d'un système de transmission du type représenté à la figure 1 et qui sont bien connues dans l'art antérieur.

La mémoire de données MD sert, d'une manière classique, à l'emmagasinage permanent ou temporaire de toutes les données nécessitant un traitement par la logique LC du système.

Enfin, le module de commande de chronologie CH distribue les impulsions de chronologie aux divers organes du système, notamment à la logique LC, par une ligne CL, et aux divers interfaces IA1, IA2, ..., IA6 par des lignes CI1, CI2, ..., CI6.

Les diverses unités représentées à la figure 2 et qui viennent d'être très brièvement évoquées sont toutes bien connues dans la technique, et ne nécessitent donc pas de description plus détaillée.

Afin de fixer les idées et de permettre une meilleure compréhension de l'invention, on se fixera les hypothèses suivantes (qui correspondent toutes à des situations classiques ou à des conditions très facilement réalisables):
. les lignes actives ayant à l'une de leurs extrémités un modem connecté à un réseau secondaire sont considérées comme fonctionnant impérativement à la vitesse du réseau secondaire;
. les terminaux connectés aux autres lignes peuvent fonctionner jusqu'à la vitesse maximale du canal commun de transmission (dans le cas contraire, on peut prévoir que ces terminaux indiquent systématiquement à travers leur interface la vitesse maximale acceptée);
. les deux voies de transmission correspondant respectivement aux deux sens de transmission, sont totalement indépendantes mais le processus d'affectation et d'optimisation des vitesses est le même; cela signifie notamment que la vitesse de transmission sur une voie donnée ne sera pas nécessairement la même dans les deux sens;
. les modems attachés au réseau secondaire sont capables de changer automatiquement de vitesse et c'est le modem secondaire connecté à l'interface du multiplexeur qui accepte la commande de vitesse du modem attaché au canal commun et contrôle automatiquement la vitesse des autres modems connectés au réseau secondaire (les modems IBM de la série 386X satisfont cette hypothèse).

Conformément à l'invention, pour une situation donnée dans laquelle plusieurs lignes sont actives aux deux extrémités du canal de transmission commun, on attribue la plus grande vitesse de transmission à la ligne (unidirectionnelle) ayant en moyenne le traffic de données à transmettre le plus important.

Par exemple si le canal commun C fonctionne à 9600 bits par seconde (BPS), que la ligne secondaire LS avec les modems MS1 et MS2 fonctionne en permanence à 2400 BPS, que l'éventail de vitesses du système varie de 2400 à 9600 BPS par incréments de 2400 BPS et qu'il y a deux interfaces actifs à vitesse libre IA1 et IA2, il restera dans chaque sens de transmission deux vitesses disponibles: 4800 et 2400 BPS.

Si la configuration est telle que le trafic de données à transmettre de A vers B est plus important sur IA1 que sur IB1 d'une part et que le trafic de données à transférer de B vers A est plus important sur IB2 que sur IA2, l'affectation des vitesses pourra se faire comme suit:

IA1 vers IB1 : 4800 BPS
IA2 vers IB2 : 2400 BPS
IA6 vers IB6 : 2400 BPS (fixe)
IB1 vers IA1 : 2400 BPS
IB2 vers IA2 : 4800 BPS
IB6 vers IA6 : 2400 BPS (fixe)

Comme le trafic de données à transmettre dans les différentes lignes peut varier au cours du temps, la présente invention prévoit de réaliser l'affectation des vitesses d'une manière automatique et dynamique. Pour ce faire chaque émetteur comporte des moyens pour tester les différents interfaces à vitesse "libres" (par opposition aux interfaces où les vitesses sont imposées, par exemple ceux connectés à des réseaux secondaires) qui lui sont connectés, pour calculer des grandeurs représentatives des trafics sur ces interfaces, et déterminer une hiérarchie de ces grandeurs. Ensuite, chaque émetteur affectera les vitesses de transmission des terminaux qui lui sont connectées en fonction de ces grandeurs et de cette hiérarchie, communiquera cette configuration de vitesses au récepteur à l'autre extrémité du canal multiplex commun C, et enfin réalisera la transmission des données selon cette configuration.

Le calcul de ces grandeurs nécessite tout d'abord la détection et la mesure d'éléments directement liés à la présence d'informations significatives sur les lignes considérées, comme par exemple les bits "1", ou les bits "0" ou les transitions. Dans tous les exemples qui vont suivre, on a choisi de compter les bits "0", car avec les standards actuels du CCITT, une ligne à l'état de repos doit transmettre continuellement des bits "1" et on conçoit donc aisément que dans ce contexte particulier le comptage des bits "1" ne serait pas représentatif de l'activité de la ligne.

L'approche la plus simple pour déterminer les grandeurs représentatives des trafics consisterait à utiliser directement le nombre de bits "0" traversant un interface donné par unité de temps. Chacune de ces grandeurs se présenterait alors sous la forme:

$$F^n_i = b^n_i$$

où $b^n_i$ est le nombre de bits "0" transmis par l'interface i entre le temps $t_{n-1}$ et le temps $t_n$.

L'utilisation de cette formule simple a cependant l'inconvénient de générer des configurations très stables et des phénomènes d'hystérésis importants. En effet, une ligne fonctionnant deux fois moins vite qu'une autre fournira deux fois moins de bits par unité de temps. Cependant toute ligne présente habituellement une activité minimale par exemple du type POLL/NACK (protocole conventionnel Question/Réponse) qui, s'il se déroule à grande vitesse risque de faire apparaître une activité importante par rapport à une autre ligne à basse vitesse mais à trafic important.

Une meilleure approche pourrait consister à pondérer la quantité de bits "0" par la vitesse de transmission ce qui revient en quelque sorte à mesurer la durée de l'activité de transmission de données. On pourrait alors utiliser une grandeur du type suivant:

$$F^n_i = b^n_i \times \frac{V_M}{V_i}$$

où $V_M$ est la vitesse de la ligne la plus rapide,
$V_i$ est la vitesse de la ligne considérée.

L'utilisation de cette formule a cette fois l'inconvénient de générer dans certains cas des situations instables: par exemple lorsque deux lignes ont sensiblement le même trafic, cette formule peut conduire à une situation où ces deux lignes échangent constamment leurs vitesses.

Conformément à l'invention, on a trouvé que la solution la plus appropriée consistait à faire une combinaison linéaire des deux approches ci-dessus. Plus particulièrement on a trouvé qu'il était souhaitable d'utiliser une grandeur du type ci-après:

$$F^n_i = b^n_i \left[ (\alpha + (1-\alpha) \frac{V_M}{V_i} \right]$$

où $\alpha$ est un nombre compris entre 0 et 1 que l'on peut soit choisir pour tous les réseaux soit optimiser en fonction des caractéristiques propres à chaque réseau.

L'analyse des valeurs obtenues pour la fonction $F^n_i$, pour chaque interface, c'est-à-dire pour chaque valeur de i, permettrait déjà de faire une excellente affectation de vitesses mais il est encore meilleur de tenir compte de l'ensemble des mesures précédentes. On peut alors intégrer la séquence $F^n_i$ en pondérant les mesures en fonction du temps. On prendra alors pour l'estimation finale du trafic $T_i^n$ au temps $t_n$ pour l'interface i la valeur:

$$T^n_i = \beta F^n_i + (1-\beta) T_i^{n-1}$$

où $T_i^{n-1}$ est l'estimation du trafic au temps $t_{n-1}$ (calculée au cours du test précédent), et
$\beta$ est un coefficient compris entre zéro et un, définissant l'effet de mémorisation des mesures précédentes (le système étant d'autant plus stable que $\beta$ sera petit).

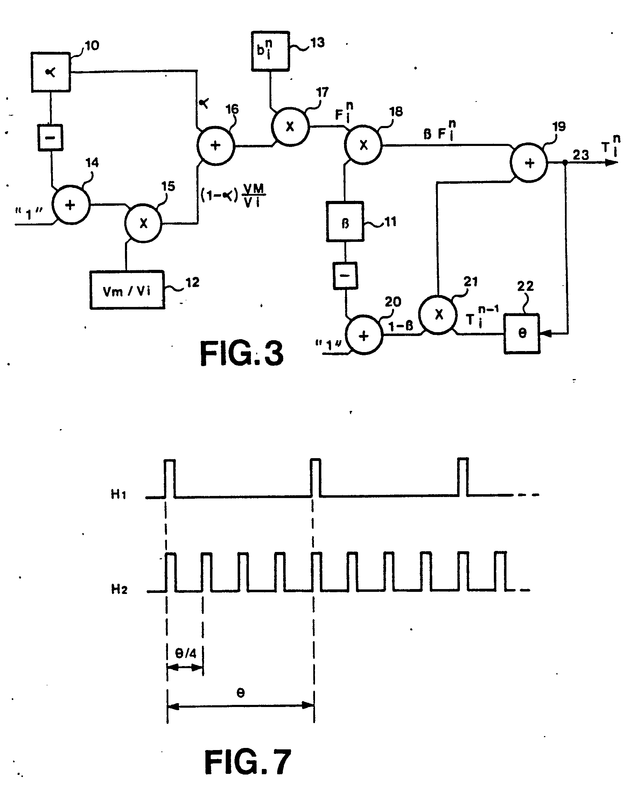

On a représenté sur la figure 3 un circuit logique montrant comment on peut calculer les différentes valeurs de $T^n_i$.

Les coefficients $\alpha$ et $\beta$ sont chargés une fois pour toutes dans les registres respectifs 10 et 11. Le registre 12 est chargé par le rapport $V_M/V_i$, les valeurs $V_M$ et $V_i$ étant prélevées dans la mémoire de données MD (qui est mise à jour au fur et à mesure de l'attribution des vitesses), et le rapport étant effectué par la logique de commande LC. Enfin, le registre 13 contient le nombre de bits $b^n_i$ prélevé sur l'interface i entre les instants $t_{n-1}$ et $t_n$ par la logique LC, et transmis par le bus BC (figure 2).

Le sommateur 14, qui reçoit $-\alpha$ et 1 sur ses entrées respectives transmet le résultat $(1-\alpha)$ à une entrée du multiplicateur 15 dont la seconde entrée reçoit $V_M/V_i$. Les entrées du sommateur 16 reçoivent respectivement les signaux de sortie du registre 10, c'est-à-dire $\alpha$, et du multiplicateur 15, c'est-à-dire $(1-\alpha)V_M/V_i$. La sortie du sommateur 16 transmet le résultat $\alpha + (1-\alpha)V_M/V_i$ à une entrée du multiplicateur 17, dont la seconde entrée reçoit $b^n_i$ en provenance du registre 14. Le signal de sortie $F^n_i$ du multiplicateur 17 est appliqué à une entrée du multiplicateur 18 dont la seconde entrée reçoit $\beta$ en provenance du registre 11. Le résultat de la multiplication $\beta F^n_i$ est appliqué à une entrée d'un sommateur 19. D'un autre côté un sommateur 20 reçoit $-\beta$ et 1 sur ses entrées respectives et transmet le résultat $(1-\beta)$ à l'une des entrées d'un multiplicateur 21.

Le signal de sortie du sommateur 19 est appliqué par l'intermédiaire d'un circuit à retard 22 à la seconde entrée du multiplicateur 21. Le circuit à retard 22 introduit un retard $\theta = t_n - t_{n-1}$. Ainsi, on voit que la ligne de sortie 23 du sommateur 19 produit le signal $T^n_i$, car ses entrées reçoivent respectivement le signal $\beta F^n_i$ et $(1-\beta)T_i^{n-1}$, ce dernier signal étant produit à la sortie du circuit à retard 22.

Une fois les différents $T^n_i$ calculés, on établit une hiérarchie des trafics $T^n_i$, ..., $T^n_h$ des interfaces actifs à vitesse libre (on rappelle ici que l'estimation du trafic n'est faite que pour ces interfaces), ainsi qu'une hiérarchie des vitesses libres. Pour établir cette dernière hiérarchie, on tient compte évidemment de la vitesse maximale du canal C et des vitesses des interfaces à vitesse imposée. Par exemple si la vitesse maximale du canal C est de 14 400 BPS et que, dans un système à six interfaces il existe à un moment donné un interface fonctionnant impérativement à 2400 BPS et trois interfaces actifs à vitesses libres, la somme des vitesses libres sera de 12 000 BPS et la hiérarchie des vitesses libres sera 2400, 4800, 7200, 9600 et 12 000.

Ensuite, on effectue l'attribution des vitesses à partir d'une comparaison entre les différents trafics mesurés et les différentes vitesses possibles. En gardant le même exemple que ci-dessus (c'est-à-dire une somme des vitesses libres de 12 000 BPS et trois interfaces actifs à vitesses libres) on va donner ci-après un exemple de procédure d'attribution de vitesses.

On calcule tout d'abord:

$$\frac{\Sigma_1^3 V_i}{\Sigma_1^3 T^n_i} = k$$

où $\Sigma^3_1 V_i$ est la somme S des vitesses libres (dans le présent exemple S = 12000), et

$\Sigma^3_1 T^n_i$ est la somme des estimations de trafic effectuées selon la formule donnée plus haut, pour chaque interface au temps $t_n$.

Il s'agit alors d'ajuster au mieux la série des $T^n_i$ avec la série des $V_i$ (où $V_i$ = 2400, 4800, 7200, 9600 ou 12 000, c'est-à-dire 2400 $p_i$ avec = $p_i$ = 1, 2, 3, 4 ou 5). Pour cela on peut procéder selon les étapes ci-après.

**Etape 1:**

Pour chacune des trois valeurs de $kT_i$, on cherche $p_i$ tel que ! $kT_i$ - 2400 $p_i$ ! est minimum. On trouve ainsi trois valeurs de $p_i$, soient $p_1$, $p_2$ et $p_3$ (donnant trois valeurs de vitesses $v_i$ = 2400 $p_i$, soient 2400 $p_1$, 2400 $p_2$, 2400 $p_3$).

**Etape 2:**

On fait la somme S = 2400 $(p_1 + p_2 + p_3)$
$\qquad\qquad\qquad = v_1 + v_2 + v_3$

**Etape 3:**

On compare s à S. La quatrième étape diffère selon que s = S (étape 4a), s > S (étape 4b) ou s < S (étape 4c).

**Etape 4a (s = S):**

Dans ce cas la procédure est terminée, et les vitesses à attribuer aux interfaces considérés sont respectivement $V_1 = V_1$, $V_2 = v_2$ et $V_3 = v_3$.

**Etape 4b (s > S)**

Dans ce cas, on cherche l'interface i pour lequel (2400 $p_i$ - $kT_i$) est maximal, et on prend comme nouvelle valeur de $p_i$ pour cet interface la valeur $p'_i = (p_i-1)$, c'est-à-dire comme nouvelle valeur de vitesse la valeur 2400$(p_i-1)$, soit $v'_i = (v_i-2400)$. Puis, on retourne à l'étape 2, et ainsi de suite juqu'à ce que s = S.

**Etape 4c (s < S)**

Dans ce cas on cherche l'interface i pour lequel ($kT_i$-2400 $p_i$) est maximum, et on prend comme nouvelle valeur de $p_i$ pour cet interface la valeur $p''_i = (p_i+1)$, c'est-à-dire comme nouvelle valeur de vitesse 2400$(p_i+1)$ soit $v''_i = (v_i+2400)$. Puis, on retourne à l'étape 2 et ainsi de suite jusqu'à que s = S.

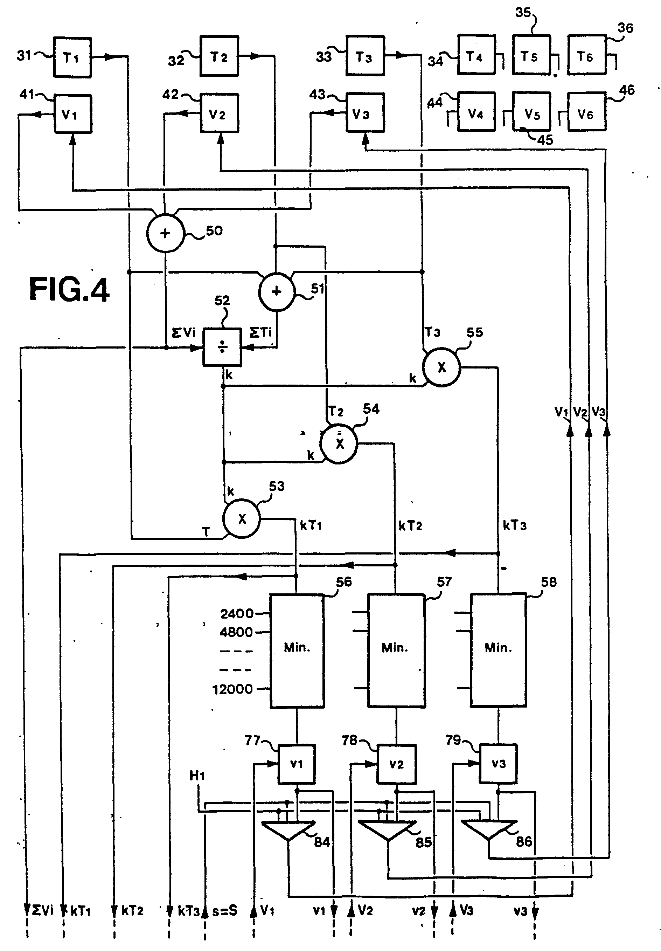

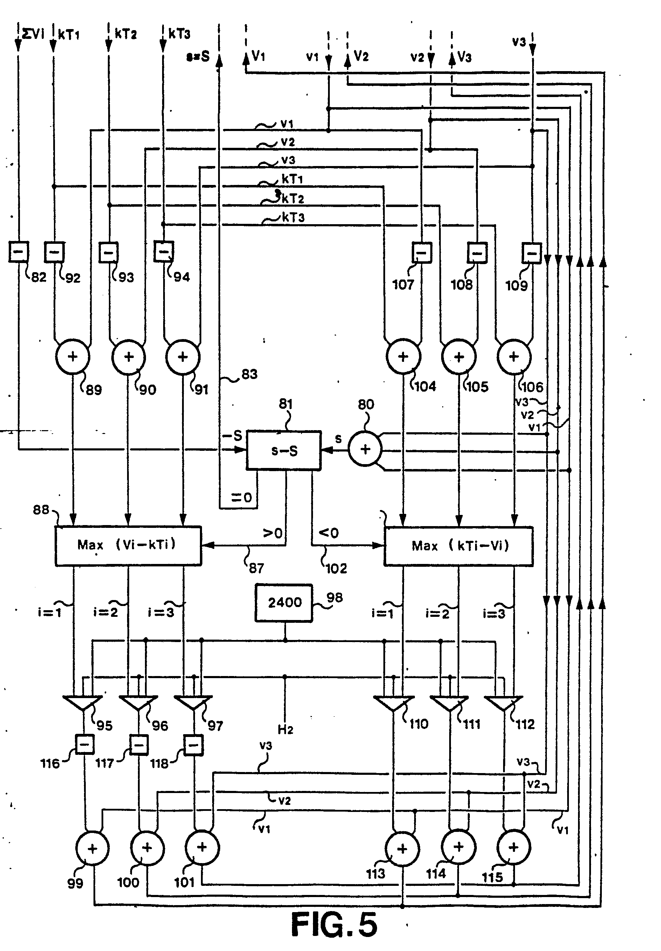

On a représenté schématiquement aux figures 4 et 5 un exemple de circuits logiques permettant de mettre en oeuvre le processus d'attribution de vitesses qui vient d'être décrit.

Ces circuits comprennent six registres 31, 32, ..., 36 pour stocker respectivement (et éventuellement) les valeurs $T^n_1$, $T^n_2$, ..., $T^n_6$ des trafics estimés au temps $t_n$ sur les six interfaces conformément à la formule de l'invention, et six registres 41, 42, ..., 46 pour stocker les vitesses $V_1$, $V_2$, ..., $V_6$ attribuées respectivement (et éventuellement) aux six interfaces au même temps $t_n$. Dans le présent exemple, on supposera pour ne pas compliquer inutilement le schéma et l'explication de son fonctionnement, qu'il n'existe que trois interfaces actifs à vitesses libres et que les données concernant ces trois interfaces sont stockées dans les registres 31, 32, 33 et 41, 42, 43. On n'a donc pas représenté, toujours pour simplifier, les circuits connectés aux registres restants, car ils sont tout à fait identiques à ceux qu'on a représenté pour les premiers registres.

On suppose donc qu'à un instant donné les registres 31, 32 et 33 contiennent respectivement les valeurs des trafics estimés $T_1$, $T_2$ et $T_3$ des interfaces IA1, IA2 et IA3, et que les registres 41, 42 et 43 contiennent respectivement les vitesses $V_1$, $V_2$ et $V_3$ de ces mêmes interfaces.

Le sommateur 50 permet de faire la somme $\Sigma V_i = V_1 + V_2 + V_3$ qu'on appellera S pour simplifier et le sommateur 51 de faire la somme $\Sigma T_i = T_1 + T_2 + T_3$. Ces sommes sont appliquées à un circuit diviseur 52 qui calcule $k = \Sigma V_i / \Sigma T_i = S / \Sigma T_i$

Les multiplicateurs 53, 54 et 55 effectuent respectivement les produits $kT_1$, $kT_2$ et $kT_3$, qui sont respectivement appliqués à l'une des entrées de trois circuits de calcul de minimum 56, 57 et 58.

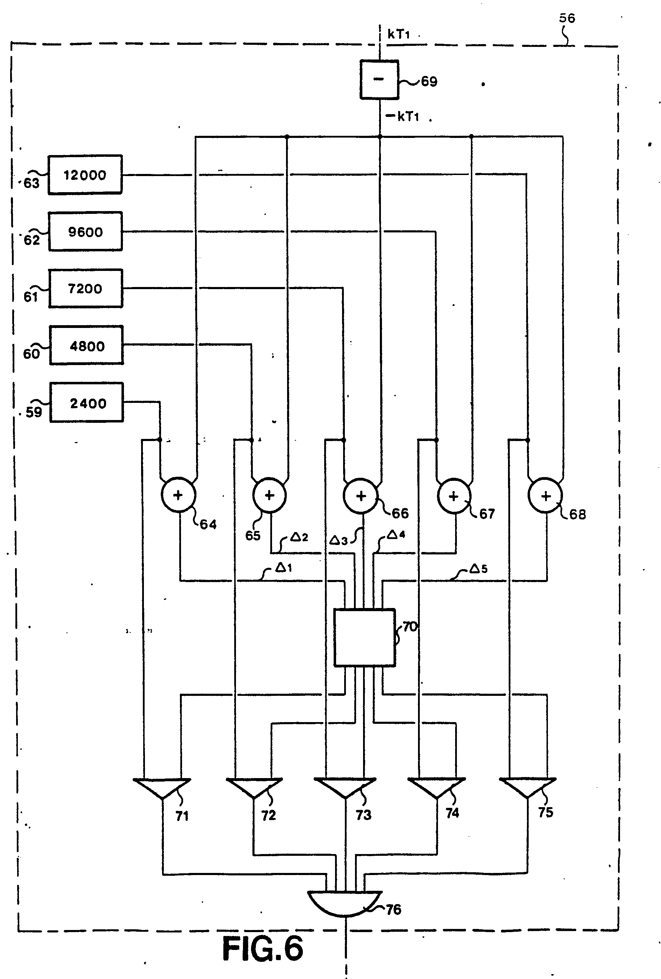

La fonction et la structure de chacun de ces circuits (qui sont tout à fait identiques) vont être expliquées en se référant à la figure 6 qui montre un exemple plus détaillé de l'un de ces circuits, 56 par exemple.

Le rôle du circuit 56 est, tout d'abord de calculer les entités $|kT_i\text{-}2400\,p_i|$, pour toutes les valeurs de $p_i$, puis de trouver la valeur de $p_i$, donc de $v_i$, pour laquelle cette entité est minimale, conformément à l'étape 1 du processus décrit plus haut.

Le circuit comprend cinq registres 59, 60, 61, 62, 63 contenant respectivement les cinq vitesses libres 2400, 4800, 7200, 9600 et 12 000. Les sorties de ces registres sont respectivement connectées aux premières entrées de cinq sommateurs 64, 65, 66, 67, 68, dont les secondes entrées reçoivent le produit $-kT_1$ obtenu en inversant le signal d'entrée du circuit 56 dans un inverseur de signe 69. Les résultats $\Delta_1$, $\Delta_2$, $\Delta_3$, $\Delta_4$ et $\Delta_5$ des cinq opérations $|kt_i\text{-}2400p_i|$ sont envoyés dans un circuit de comparaison/décision 70 qui détermine laquelle des valeurs $\Delta_1$, $\Delta_2$, $\Delta_3$, $\Delta_4$ et $\Delta_5$ est la plus faible. Ce circuit comporte cinq sorties et il envoie un signal de conditionnement sur celle de ses sorties qui correspond à la valeur de $\Delta$ la plus faible. Ces cinq sorties sont respectivement connectées aux premières entrées de cinq portes ET 71, 72, 73, 74 et 75 dont les secondes entrées sont respectivement connectées aux sorties des registres 59 à 63 et reçoivent donc les cinq vitesses 2400 à 12 000. Les sorties des portes 71 à 75 constituent les entrées d'une porte OU 76, dont la sortie va transmettre celle des cinq vitesses 2400 à 12 000 qui correspond à la valeur de $\Delta$ la plus faible, soit $v_1$.

Il en est de même pour les circuits 57 et 58 qui vont délivrer respectivement à leurs sorties les valeurs $v_2$ et $v_3$ correspondant aux valeurs de $\Delta$ minimales calculées dans chacun d'eux.

Les valeurs $v_1$, $v_2$ et $v_3$ sont respectivement introduites dans trois registres 77, 78 et 79.

Les sorties de ces trois registres sont connectées à un sommateur 80 (figure 5) dont la sortie délivre la somme $s = v_1 + v_2 + v_3$. Cette sortie est connectée à une première entrée d'un circuit sommateur 81, dont la seconde entrée reçoit le signal $-S = -(V_1 + V_2 + V_3)$ en provenance du sommateur 50, après inversion de signe en 82. Le circuit 81 fait donc l'opération s-S et produit un signal de conditionnement sur l'une de ses trois sorties selon que s-S = 0, s-S > 0, ou s-S < 0 (étape 3 du processus).

La première ligne de sortie 83 du circuit 81 (celle qui est activée pour s-S = O) est connectée à chacune des premières entrées de trois portes ET 84, 85 et 86. Les secondes entrées de ces portes ET sont respectivement connectées aux trois sorties des registres 77, 78 et 79. Quand aux sorties des portes ET 84, 85 et 86, elles sont respectivement connectées aux entrées des registres 41, 42 et 43.

On voit ainsi que, lorsque s-S = 0, les contenus des registres 77, 78 et 79 sont transférés dans les registres 41, 42 et 43 qui définissent les vitesses des trois interfaces IA1, IA2 et IA3, conformément à l'étape 4a du processus.

Si le circuit 81 détermine que s-S est supérieur à zéro, c'est la deuxième ligne de sortie 87 du circuit 81 qui est activée. Cette ligne applique un signal de conditionnement à un circuit 88 dont la fonction est de déterminer quel est celui des trois interfaces pour lequel l'entité $(2400p_i\text{-}kT_i)$ ou $(v_i\text{-}kT_i)$ est maximale (étape 4b du processus).

Le circuit 88 comporte trois entrées recevant respectivement les valeurs $v_1\text{-}kT_1$, $v_2\text{-}kT_2$ et $v_3\text{-}kT_3$. Ces valeurs sont fournies respectivement par les sorties de trois sommateurs 89, 90 et 91. Les premières entrées de ces trois sommateurs sont respectivement reliées aux lignes de sorties des registres 77, 78 et 79 (qui délivrent les valeurs $v_1$, $v_2$ et $v_3$). Les secondes entrées de ces sommateurs sont respectivement reliées, par l'intermédiaire de trois inverseurs de signe 92, 93 et 94 aux lignes de sortie des sommateurs 53, 54 et 55 (qui délivrent les produits $kT_1$, $kT_2$ et $kT_3$).

Le circuit 88, qui comporte trois sorties compare les trois valeurs $v_i\text{-}kT_i$ qui lui sont soumises, détermine celle qui est maximale, et délivre un signal de conditionnement sur celle de ses sorties qui correspond à l'interface dont la valeur $v_i\text{-}kT_i$ est maximale. On supposera pour fixer les idées qu'il ss'agit de la sortie 1.

Les sorties du circuit 88 sont respectivement connectées aux premières entrées de trois portes ET 95, 96 et 97 dont chacune des secondes entrées reçoit la valeur 2400 d'un registre à contenu fixe 98. Les sorties de ces portes ET sont respectivement connectées aux premières entrées de trois sommateurs 99, 100 et 101 par l'intermédiaire de trois inverseurs de signe 116, 117 et 118. Ainsi, la valeur -2400 est appliquée à seulement l'un (99) de ces sommateurs, puisque l'une seulement (95) des portes ET 95, 96 et 97 est passante. Les secondes

**0 112 953**

entrées des sommateurs 99, 100 et 101 reçoivent respectivement les valeurs $v_1$, $v_2$ et $v_3$ délivrées par les registres 77, 78 et 79. Le sommateur 99 va délivrer sur sa sortie la valeur $v_1$-2400, qui est alors transférée dans le registre 77 où elle va remplacer la valeur précédente c'est-à-dire $v_1$. Les contenus des deux autres registres ne changent pas puisque les deux autres sommateurs 101 et 102 ayant une entrée inactive (les sorties des portes ET 96 et 97) ne donnent pas de signal de sortie.

Les registres 77, 78 et 79 contiennent alors une nouvelle série de vitesses $v_1$-2400, $v_2$ et $v_3$ dont la somme $s' = s$-2400 est à nouveau effectuée par le sommateur 80. Puis le circuit 81 détermine à nouveau si s'est égal, supérieur ou inférieur à S et ainsi de suite jusqu'à ce qu'on arrive à l'égalité des deux sommes, auquel cas les valeurs des vitesses contenues dans les registres 77, 78 et 79 sont transférées dans les registres 41, 42 et 43, comme on l'a vu plus haut dans l'étape 4a, et constituent les vitesses attribuées respectivement aux interfaces IA1, IA2 et IA3.

Si après la comparaison effectuée par le circuit 81 à l'étape 3 du processus, le circuit détermine que s-S est inférieur à zéro, c'est alors la troisième ligne de sortie 102 du circuit 81 qui est activée. Cette ligne délivre alors un signal de conditionnement à un circuit 103 dont la fonction est de déterminer quel est celui des trois interfaces pour lequel l'entité ($kT_i$-2400$p_i$) ou ($kT_i$-$v_i$) est maximale (étape 4c du processus).

Le circuit 103 comporte trois entrées recevant respectivement les valeurs $kT_1$-$v_1$, $kT_2$-$v_2$ et $kT_3$-$v_3$. Ces valeurs sont fournies respectivement par les sorties de trois sommateurs 104, 105 et 106. Les premières entrées de ces trois sommateurs sont respectivement reliées par l'intermédiaire de trois inverseurs de signe 107, 108 et 109, aux lignes de sorties des registres 77, 78 et 79 (qui délivrent les valeurs $v_1$, $v_2$ et $v_3$). Les secondes entrées de ces sommateurs sont respectivement reliées aux lignes de sortie des sommateurs 53, 54 et 55 (qui délivrent les produits $kT_1$, $kT_2$ et $kT_3$).

Le circuit 103, qui comporte trois sorties, compare les trois valeurs $kT_i$-$v_i$ qui lui sont soumises, détermine celle qui est maximale, et délivre un signal de conditionnement sur celle de ses sorties qui correspond à l'interface dont la valeur $kT_i$-$v_i$ est maximale. On supposera pour fixer les idées qu'il s'agit de la sortie 2.

Les sorties du circuit 103 sont respectivement connectées aux premières entrées de trois portes ET 110, 111 et 112 dont chacune des secondes entrées reçoit la valeur 2400 du registre à contenu fixe 98. Les sorties de ces portes ET sont connectées aux premières entrées de trois sommateurs 113, 114 et 115. Ainsi, la valeur 2400 est appliquée à seulement l'un (114) de ces derniers sommateurs, puisque l'une seulement (111) des portes ET 110, 111, 112 est passante. Les secondes entrées des sommateurs 113, 114 et 115 reçoivent respectivement les valeurs $v_1$, $v_2$ et $v_3$ délivrées par les registres 77, 78 et 79. Le sommateur 114 va délivrer sur sa sortie la valeur $v_2$+2400, qui est alors transférée dans le registre 78 où elle va remplacer la valeur précédente c'est-à-dire $v_2$. Les contenus des deux autres registres ne changent pas puisque les deux autres sommateurs 113 et 115 ayant une entrée inactive (les sorties des portes ET 110 et 112) ne donnent pas de signal de sortie.

Les registres 77, 78 et 79 contiennent alors une nouvelle série de vitesses $v_1$, $v_2$+2400, et $v_3$ dont la somme $s'' = s$+2400 est à nouveau effectuée par le sommateur 80. Puis le circuit 81 détermine à nouveau si s'' est égal, supérieur ou inférieur à S et ainsi de suite jusqu'à ce qu'on arrive à l'égalité des deux sommes, auquel cas les valeurs des vitesses contenues dans les registres 77, 78 et 79 sont transférées dans les registres 41, 42 et 43, comme on l'a vu plus haut.

Les circuits logiques représentés aux figures 4 et 5 comportent également des circuits de distribution de signaux chronologiques afin de commander le déroulement approprié des diverses étapes du processus. En fait, deux circuits de chronologie sont suffisants. Le premier, $H_1$ (figure 4), est connecté à une troisième entrée des portes ET 84, 85 et 86.

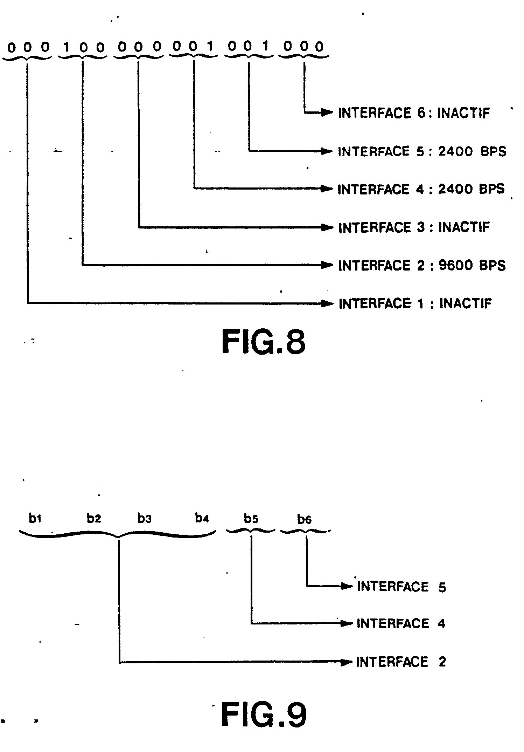

Il commande le transfert des valeurs de vitesses calculées par la logique et définitivement attribuées (pour la période de temps considérée) aux trois interfaces, dans les registres 41, 42 et 43. La période des impulsions délivrées par le circuit $H_1$ est égale è la période d'échantillonnage, c'est-à-dire $\theta$ (on rappelle que $\theta = t_n$-$t_{n-1}$). Le second circuit de chronologie $H_2$ (figure 5) est connecté à une troisième entrée des portes ET 95, 96, 97, 116, 117 et 118. Il commande le transfert des valeurs $v_i$+2400 ou $v_i$-2400 calculées durant les étapes 4b ou 4c du processus dans les registres 77, 78 ou 79. Du fait que les étapes 4b ou 4c peuvent être répétées plusieurs fois au cours d'un même processus, la période des impulsions délivrées par le circuit $H_2$ sera un sous multiple de $\theta$, par exemple $\frac{\theta}{4}$ (dans le présent exemple les étapes 4b ou 4c ne peuvent pas se répéter plus de quatre fois). La figure 7 montre schématiquement les impulsions délivrées respectivement par les circuits $H_1$ et $H_2$.

En pratique la procédure d'attribution dynamique des vitesses conformes à l'invention est utilisée dès le démarrage du système, mais il est bien entendu nécessaire à la mise en route, de prévoir une configuration de vitesses initiales prédéterminée. Cette configuration initiale dépendra notamment de:

. la vitesse du canal multiplex commun,

. l'éventail de vitesses disponibles,

. l'existence de réseaux secondaires à vitesse fixe, et

. le nombre d'interfaces de terminaux ou lignes reliés au système.

Le tableau suivant montre un exemple de configuration de vitesses initiales applicable à un système de transmission à 14 400 BPS et à six interfaces avec vitesse minimale à 2400 BPS et échelonnement des vitesses par multiples de 2400 BPS.

7

| Somme des vitesses libres (non affectée à des réseaux secondaires) / Nb d'interfaces à vitesses libres | 6 | 5 | 4 | 3 | 2 | 1 |
|---|---|---|---|---|---|---|
| 14 400 | 2400<br>2400<br>2400<br>2400<br>2400<br>2400 | 4800<br>2400<br>2400<br>2400<br>2400 | 4800<br>4800<br>2400<br>2400 | 4800<br>4800<br>4800 | 7200<br>7200 | 14400 |
| 12 000 | | 2400<br>2400<br>2400<br>2400<br>2400 | 4800<br>2400<br>2400<br>2400 | 4800<br>4800<br>2400 | 7200<br>4800 | 12000 |
| 9 600 | | | 2400<br>2400<br>2400<br>2400 | 4800<br>2400<br>2400 | 4800<br>4800 | 9600 |
| 7 200 | | | | 2400<br>2400<br>2400 | 4800<br>2400 | 7200 |
| 4 800 | | | | | 2400<br>2400 | 4800 |
| 2 400 | | | | | | 2400 |

On remarquera qu'on a recherché dans ce tableau à maintenir, pour chaque cas, un écart minimum entre la vitesse maximale et la vitesse minimale afin de démarrer sur une configuration moyenne. Par exemple, dans le cas d'un somme de vitesses disponibles de 14 400 BP, avec deux lignes actives à vitesse libre, on partira d'une

0 112 953

vitesse identique de 7200 BPS pour chaque ligne. Si après la mise en route les tests effectués sur la base de la formule de l'invention révèlent que l'une des lignes a un trafic quasi nul par exemple, le système basculera automatiquement sur une configuration 12 000 BPS/ 2400 BPS. Au contraire si les calculs effectués à partir de l'algorithme ci-dessus révèlent une faible différence de trafic entre les deux lignes, le système sélectionnera automatiquement deux vitesses identiques (7200 et 7200) ou aussi proches que possible (9600 et 4800). Dans tous les cas la somme des vitesses correspondra à la somme des vitesses libres dans le système, ce qui permettra de maintenir en permanence un rendement optimal.

On a mentionné au début de la description de l'invention que, une fois que les vitesses de transmission ont été attribuées aux divers interfaces pour un sens donné de la transmission, par exemple de la station A vers la station B, il faut indiquer aux récepteurs de la station B quelles sont les vitesses qui ont été attribuées aux divers interfaces, de façon que ces récepteurs puissent se synchroniser convenablement. La transmission de cette information peut s'effectuer sous la forme d'une chaîne de 18 bits (si l'on garde toujours l'exemple de réalisation décrit plus haut), dans laquelle chaque groupe de trois bits représente l'état et/ou la vitesse de transmission correspondant à chaque interface, en adoptant le code suivant par exemple:

000 interface inactif
001 interface actif 2400 BPS
010 interface actif 4800 BPS
011 interface actif 7200 BPS
100 interface actif 9600 BPS
101 interface actif 12000 BPS
110 interface actif 14400 BPS
111 non affecté

La transmission de cette information, qui est très courte, s'effectue pour chaque interface durant une période d'inactivité de l'interface.

La figure 8 montre un exemple d'une telle chaîne de bits lorsque seuls les interfaces 2, 4 et 5 sont actifs. Une telle chaîne permet de définir simplement l'affectation des six informations binaires qui seront transmises à chaque instant de signalisation sur le canal multiplex C tant que la configuration de vitesses restera la même que celle représentée à la figure 8. Ces six informations binaires b1 à b6 sont schématisées à la figure 9, où l'on voit que les quatre premières informations binaires b1 à b4 sont affectées à l'interface 2 (dont la vitesse est 4x2400 BPS) et les informations binaires restantes b5 et b6 sont respectivement affectées aux interfaces 4 et 5, dont la vitesse est 2400 BPS.

## Revendications

1. Procédé d'affectation dynamique de vitesses de transmission, dans un système de transmission comportant plusieurs lignes pouvant fonctionner chacune à différentes vitesses choisies parmi une série prédéterminée de vitesses $V_1$, $V_2$, ..., $V_j$, et dans lequel lesdites lignes sont multiplexées dans un canal commun (c) pouvant fonctionner à une vitesse maximale $V_c$, la somme S des vitesses disponibles pour lesdites lignes étant nécessairement inférieure ou égale à ladite vitesse maximale $V_c$, caractérisé en ce qu'il comporte les étapes suivantes:

a) on prélève les informations élémentaires passant dans chaque ligne pendant une période prédéterminée $\theta$ s'écoulant entre les instants $t_{n-1}$ et $t_n$,

b) on compte, pour chaque ligne, le nombre $b^n_i$ desdites informations élémentaires qui sont représentatives des données significatives transmises sur la ligne et prélevées durant ladite période $\theta$,

c) on calcule, pour chaque ligne, un facteur d'activité $F^n_i$ à l'instant $t_n$ conforme à l'expression:

$$F^n_i = b^n_i \left[ \alpha + (1-\alpha) \frac{V_M}{V_i} \right]$$

dans laquelle:

$\alpha$ est un coefficient compris entre 0 et 1,

$V_M$ désigne la vitesse de la ligne fonctionnant à la vitesse la plus grande, et

$V_i$ désigne la vitesse de la ligne considérée,

d) on associe chacun desdits facteurs d'activité à l'une desdites vitesses de ladite série prédéterminée de façon que les écarts entre lesdits facteurs d'activité et les vitesses qu'on leur a associé soient minimaux et que la somme desdites vitesses associées soit égale à ladite somme S des vitesses disponibles, et

e) on affecte les vitesses ainsi déterminées aux lignes correspondantes.

2. Procédé d'affectation dynamique de vitesses de transmission, dans un système de transmission comportant plusieurs lignes pouvant fonctionner chacune à différentes vitesses choisies parmi une série prédéterminée de vitesses $V_1$, $V_2$, ..., $V_j$, et dans lequel lesdites lignes sont multiplexées dans un canal commun (c) pouvant fonctionner à une vitesse maximale $V_c$, la somme S des vitesses disponibles pour lesdites lignes étant nécessairement inférieure ou égale à ladite vitesse maximale $V_c$, caractérisé en ce qu'il comporte les étapes suivantes:

a) on prélève les informations élémentaires passant dans chaque ligne pendant une période prédéterminée $\theta$ s'écoulant entre les instants $t_{n-1}$ et $t_n$,

b) on compte, pour chaque ligne, le nombre $b^n_i$ desdites informations élémentaires qui sont représentatives

9

des données significatives transmises sur la ligne et prélevées durant ladite période θ,

c) on calcule, pour chaque ligne, un facteur d'activité $F^n_i$ à l'instant $t_n$ conforme à l'expression:

$F^n_i = b^n_i [ \alpha + (1-\alpha) \frac{V_M}{V_i} ]$

où

$\alpha$ est un coefficient compris entre 0 et 1,

$V_M$ désigne la vitesse de la ligne fonctionnant à la vitesse la plus grande, et

$V_i$ désigne la vitesse de la ligne considérée,

d) on calcule une estimation de trafic $T^n_i$ à l'instant $t_n$ selon l'expression:

$T^n_i = \beta F^n_i + (1-\beta) T^{n-1}_i$ dans laquelle:

$\beta$ est un coefficient compris entre 0 et 1,

et

$T_i^{n-1}$ est l'estimation de trafic calculée à l'instant $t_{n-1}$,

e) on associe chacune desdites estimation de trafic $T^n_i$ à l'une des vitesses de ladite série prédéterminée de façon que les écarts entre lesdites estimations de trafic et les vitesses qu'on leur a associé soient minimaux et que la somme desdites vitesses associées soit égale à ladite somme S des vitesses disponibles, et

f) on affecte les vitesses ainsi déterminées aux lignes correspondantes.

3. Procédé selon la revendication 2, caractérisé en ce que, durant l'étape e),

on calcule le facteur $k = \frac{S}{\Sigma T_i}$ et

on détermine les vitesses $v_i$ de ladite série de vitesses prédéterminées pour lesquelles les entités respectives $|v_i-kT^n_i|$ relatives aux diverses lignes sont minimales, et pour lesquelles la somme $\Sigma v_i$ des vitesses ainsi déterminées est égale à S.

4. Procédé selon la revendication 2, appliqué à un système de transmission dans lequel les vitesses de ladite série de vitesses prédéterminées sont du type $pV_0$, où $p = 1, 2, 3, ..., j$ et $V_0$ est la vitesse de transmission la plus basse, caractérisé en ce que, durant l'étape e),

e1) on calcule le facteur $k = \frac{S}{\Sigma T_i}$.

e2) on détermine les vitesses $v_i = p_i V_0$ relatives aux diverses lignes pour lesquelles les entités $|v_i-kT^n_i|$ sont minimales,

e3) on fait la somme $s = \Sigma v_i$,

e4) on calcule le signe de la différence s-S, et

. si $s = S$, on affecte les vitesses $v_i$ ainsi déterminées aux lignes correspondantes,

. si $s > S$, on recherche, parmi les vitesses $v_i$ déterminées durant la sous-étape e2), celle pour laquelle l'entité $(v_i-kT^n_i)$ est maximale, on prend comme nouvelle valeur de vitesse, pour la ligne correspondante, la valeur $v'_i = v_i-V_0$ on reprend les sous-étapes e3) et e4), et ainsi de suite jusqu'à ce qu'on trouve $s = S$,

. si $s < S$, on recherche, parmi les vitesse $v_i$ déterminées durant la sous-étape e2), celle pour laquelle l'entité $(kT^n_i-v_i)$ est maximale, on prend comme nouvelle valeur de vitesse, pour la ligne correspondante, la valeur $v''_i = v_i+V_0$, on reprend les sous-étapes e3) et e4), et ainsi de suite jusqu'à ce qu'on trouve $s = S$.

5. Procédé selon l'une quelconque des revendications précédentes, caractérisé en ce que la somme des vitesses disponibles S est égale à la différence entre la vitesse maximale $V_c$ du canal commun et la somme des vitesses des lignes à vitesse fixe.

6. Procédé selon l'une quelconque des revendications précédentes, caractérisé en ce que lesdites informations élémentaires sont des bits "0" et "1", et lesdites informations élémentaires représentatives de données transmises sur la ligne sont les bits "0".

**Patentansprüche**

1. Verfahren dynamischer Zuordnung von Übertragungsgeschwindigkeiten in einem Übertragungssystem, das mehrere Leitungen enthält, die jeweils in verschiedenen Geschwindigkeiten betrieben werden können, auszuwählen unter einer vorgegebenen Serie von Geschwindigkeiten $V_1, V_2, ..., V_j$, und in dem die besagten Leitungen in einem gemeinsamen Kanal (C) multiplexiert werden, der in einer Höchstgeschwindigkeit $V_C$ betrieben werden kann, wobei die Summe S der für die besagten Leitungen verfügbaren Geschwindigkeiten notwendigerweise kleiner oder gleich der Höchstgeschwindigkeit $V_C$ ist, dadurch gekennzeichnet, dass es folgende Schritte enthält:

a) aus jeder Leitung werden während einer vorgegebenen Zeit θ zwischen den Augenblicken $t_{n-1}$ und $t_n$ die Grundinformationen entnommen,

b) für jede Leitung wird die Zahl $b^i_n$ der besagten Grundinformationen gezählt, die für die signifikativen Daten stehen, welche auf der Leitung übertragen und während der besagten Zeit θ entnommen werden,

c) man berechnet für jede Leitung einen Aktivitätsfaktor $F^i_n$ zum Zeitpunkt $t_n$, nach der Gleichung:

$F^i_n = b^i_n [ \alpha + (1-\alpha) \frac{V_M}{V_i} ]$

in der:

$\alpha$ ein Beiwert zwischen 0 und 1 ist,

$V_M$ die Geschwindigkeit der Leitung, die in Höchstgeschwindigkeit betrieben wird, und

$V_i$ die Geschwindigkeit der betreffenden Leitung,

d) einem jeden dieser Aktivitätsfaktoren wird eine der besagten Geschwindigkeiten der besagten vorgegebenen Serie zugeordnet, so dass die Abstände zwischen den besagten Aktivitätsfaktoren und den ihnen zugeordneten Geschwindigkeiten so klein wie möglich gehalten werden, und dass die Summe der besagten zugeordneten Geschwindigkeiten gleich der Summe S der verfügbaren Geschwindigkeiten ist, und
e) man teilt die so ermittelten Geschwindigkeiten den entsprechenden Leitungen zu.

2. Verfahren dynamischer Zuordnung von Übertragungsgeschwindigkeiten in einem Übertragungssystem, das mehrere Leitungen enthält, die jeweils in verschiedenen Geschwindigkeiten betrieben werden können, auszuwählen unter einer vorgegebenen Serie von Geschwindigkeiten $V_1$, $V_2$, ..., $V_j$, und in dem die besagten Leitungen in einem gemeinsamen Kanal (C) multiplexiert werden, der in einer Höchstgeschwindigkeit $V_C$ betrieben werden kann, wobei die Summe S der für die besagten Leitungen verfügbaren Geschwindigkeiten notwendigerweise kleiner oder gleich der Höchstgeschwindigkeit $V_C$ ist, dadurch gekennzeichnet, dass es folgende Schritte enthält:
a) aus jeder Leitung werden während einer vorgegebenen Zeit $\theta$ zwischen den Augenblicken $t_{n-1}$ und $t_n$ die Grundinformationen entnommen,
b) für jede Leitung wird die Zahl $b^i_n$ der besagten Grundinformationen gezählt, die für die signifikativen Daten stehen, welche auf der Leitung übertragen und während der besagten Zeit entnommen werden,
c) man berechnet für jede Leitung einen Aktivitätsfaktor $F^i_n$ zum Zeitpunkt $t_n$, nach der Gleichung:
$$F^i_n = b^i_n \left[ \alpha + (1-\alpha) \frac{V_M}{V_i} \right]$$
in der:
$\alpha$ ein Beiwert zwischen 0 und 1 ist,
$V_M$ die Geschwindigkeit der Leitung, die in Höchstgeschwindigkeit betrieben wird, und
$V_i$ die Geschwindigkeit der betreffenden Leitung,
d) man berechnet eine Schätzung des Verkehrs $T^n_i$ zum Zeitpunkt $t_n$ nach der Gleichung:
$T^n_i = \beta F^n_i + (1-\beta) T_i^{n-1}$, in der
$\beta$ ein Beiwert zwischen 0 und 1 ist, und
$T_i^{n-1}$ die Schätzung des zum Zeitpunkt $t_{n-1}$ berechneten Verkehrs.
e) man ordnet jede der besagten Verkehrsschätzungen $T^n_i$ einer der Geschwindigkeiten der besagten vorgegebenen Serie so zu, dass die Abweichungen zwischen den besagten Verkehrsschätzungen und den ihnen zugeordneten Geschwindigkeiten möglichst klein sind und die Summe der besagten zugeordneten Geschwindigkeiten gleich der besagten Summe S der verfügbaren Geschwindigkeiten ist, und
f) man teilt die so ermittelten Geschwindigkeiten den entsprechenden Leitungen zu.

3. Verfahren gemäss Anspruch 2, dadurch gekennzeichnet, dass in der Etappe e) der Faktor $k = \frac{S}{\Sigma T_i}$ berechnet wird, und man ermittelt die Geschwindigkeiten $v_i$ der besagten Serie vorgegebener Geschwindigkeiten, für die die jeweiligen Elemente $|v_i - kT^n_i|$ bezüglich der verschiedenen Leitungen möglichst gering sind und für die die Summe $\Sigma v_i$ der so ermittelten Geschwindigkeiten gleich S ist.

4. Verfahren gemäss Anspruch 2, angewandt auf ein Übertragungssystem, in dem die Geschwindigkeiten der besagten Serie vorgegebener Geschwindigkeiten vom Typ $pV_o$ sind, mit p = 1, 2, 3, ..., j und $V_o$ als niedrigster Übertragungsgeschwindigkeit, dadurch gekennzeichnet, dass im Schritt e)
e1) der Faktor $k = \frac{S}{\Sigma T_i}$ berechnet wird,
e2) die Geschwindigkeiten $v_i = p_i V_o$ ermittelt werden, die den verschiedenen Leitungen entsprechen, für welche die Elemente $|v_i - kT^n_i|$ möglichst gering sind,
e3) man bildet die Summe $s = \Sigma v_i$,
e4) man berechnet das Vorzeichen der Differenz s-S, und
. wenn s = S, teilt man die so ermittelten Geschwindigkeiten $v_i$ den entsprechenden Leitungen zu,
. wenn s > S, sucht man unter den im Unter-Schritt e2 ermittelten Geschwindigkeiten die auf, für die das Element $|v_i - kT^n_i|$ möglichst gross ist, nimmt als neuen Geschwindigkeitswert für die entsprechende Leitung den Wert $v'_i = v_i - V_o$ und nimmt die Unterschritte e3 und e4 wieder auf, und so weiter, bis s = S,
. wenn s < S, sucht man unter den im Unter-Schritt e2 ermittelten Geschwindigkeiten die auf, für die das Element $|kT^n_i - v_i|$ möglichst gross ist, nimmt als neuen Geschwindigkeitswert für die entsprechende Leitung den Wert $v''_i = v_i + V_o$ und nimmt die Unterschritte e3 und e4 wieder auf, und so weiter, bis s = S.

5. Verfahren gemäss einem der vorangehenden Ansprüche, dadurch gekennzeichnet, dass die Summe der verfügbaren Geschwindigkeiten S gleich dem Unterschied zwischen der Höchstgeschwindigkeit $V_c$ des gemeinsamen Kanals und der Summe der Geschwindigkeiten der Leitungen mit fester Geschwindigkeit ist.

6. Verfahren gemäss einem der vorangehenden Ansprüche, dadurch gekennzeichnet, dass die besagten Grundinformationen Bits "0" und "1" sind, und dass die besagten Grundinformationen, die die auf der Leitung übertragenen Daten darstellen, Bits "0" sind.

## Claims

1. A method of dynamic assignment of transmission speeds in a transmission system comprising a plurality of lines capable each of operating at different speeds selected from a range of predetermined speeds $V_1$, $V_2$, ..., $V_j$, and wherein said lines are multiplexed into a common channel (C) capable of operating at a maximum speed $V_c$, the sum S of the speeds available for said lines being necessarily less than or equal to said maximum speed $V_c$, said method being characterized in that it comprises the steps of:

(a) sampling the signals transmitted over each line during a predetermined time interval $\theta$ elapsing between times $t_{n-1}$ and $t_n$,

(b) detecting, for each line, the number $b^n_i$ of those elementary information items which are representative of significant data transmitted over that line during said time interval $\theta$,

(c) calculating, for each line, at time $t_n$ an activity factor $F^n_i$ defined as

$$F^n_i = b^n_i \left[ \alpha + (1-\alpha) \frac{V_M}{V_i} \right]$$

where $\alpha$ is a coefficient in the range from 0 to 1,

$V_M$ is the speed of the line that operates at the highest speed, and

$V_i$ is the speed of the line considered,

(d) associating each of said activity factors with one of said speeds in said predetermined speed range so that discrepancies between said activity factors and the speeds associated therewith are minimized and that the sum of said associated speeds equals said sum S of available speeds, and

(e) assigning the speeds so determined to the corresponding lines.

2. A method of dynamic assignment of transmission speeds in a transmission system comprising a plurality of lines capable each of operating at different speeds selected from a predetermined range of speeds $V_1$, $V_2,...,V_i$, and wherein said lines are multiplexed into a common channel (C) capable of operating at a maximum speed $V_c$, the sum S of the speeds available for said lines being necessarily less than or equal to said maximum speed $V_c$, said method being characterized in that it comprises the steps of:

(a) sampling the signals transmitted over each line during a predetermined time interval $\theta$ elapsing between times $t_{n-1}$ and $t_n$,

(b) detecting, for each line, the number $b^n_i$ of those elementary information items which are representative of significant data transmitted over that line during said time interval $\theta$,

(c) calculating, for each line, at time $t_n$, an activity factor $F^n_i$ defined as

$$F^n_i = b^n_i \left[ \alpha + (1-\alpha) \frac{V_M}{V_i} \right]$$

where $\alpha$ is a coefficient in the range from 0 to 1,

$V_M$ is the speed of the line operating at the highest speed, and

$V_i$ is the speed of the line considered,

(d) calculating an estimate $T^n_i$ of the traffic at time $t_n$, said estimate being defined as

$$T^n_i = \beta F^n_i + (1-\beta) T^{n-1}_i$$

where $\beta$ is a coefficient in the range from 0 to 1, and

$T_i^{n-1}$ is the traffic estimate calculated at time $t_{n-1}$,

(e) associating each of said traffic estimates $T^n_i$ with one of said speeds in said predetermined speed range so that discrepancies between said traffic estimates and the speeds associated therewith are minimized and that the sum of said associated speeds equals said sum S of available speeds, and

(f) assigning the speeds thus determined to the corresponding lines.

3. The method of claim 2, charaterized in that said step (e) includes the sub-steps of:

calculating factor $k = \frac{S}{\Sigma T_i}$, and determining those speeds in said predetermined range for which the respective entities $|v_i - kT^n_i|$ relating to the various lines have a minimum value and for which the sum $\Sigma v_i$ of the speeds thus determined is equal to S.

4. The method of claim 2, applied to a transmission system in which the speeds in said predetermined range are of the type $pV_0$, where $p = 1, 2, 3,...,j$ and $V_0$ is the lowest transmission speed, characterized in that step (e) includes the sub-steps of:

(e1) calculating factor $k = \frac{S}{\Sigma T_i}$,

(e2) determining those speeds $v_i = p_i V_0$ relating to the various lines for which said entities $|v_i - kT^n_i|$ have a minimum value,

(e3) calculating the sum $s = \Sigma v_i$,

(e4) calculating the sign of the difference s-S, and

- if $s = S$, assigning the speeds $v_i$ thus determined to the corresponding lines;

- if $s > S$, finding which of speeds $v_i$, as determined in sub-step (e2), is the one for which the entity $|v_i - kT^n_i|$ has a maximum value, then using value $v'_i = v_i - V_0$ as a new speed value for the corresponding line, and repeating sub-steps (e3) and (e4) until $s = S$,

- if $s < S$, finding which of speeds $v_i$, as determined in sub-step (e2), is the one for which the entity $|kT^n_i - v_i|$ has a maximum value, then using value $v''_i = v_i + V_0$ as a new speed value for the corresponding line, and repeating sub-steps (e3) and (e4) until $s = S$.

5. The method of any one of the preceding claims, characterized in that the sum S of available speeds is equal to the difference between the maximum speed $V_c$ of the common channel and the sum of the speeds of those lines which operate at a fixed speed.

6. The method of any one of the preceding claims, characterized in that said elementary information items are "0" and "1" bits, and in that said elementary information items representative of data transmitted over the line are "0" bits.

FIG.1

STATION A

STATION B

0 112 953

**FIG. 2**

**FIG.3**

**FIG.7**

FIG.4

**FIG.5**

**FIG.6**

000 100 000 001 001 000

→ INTERFACE 6 : INACTIF

→ INTERFACE 5 : 2400 BPS

→ INTERFACE 4 : 2400 BPS

→ INTERFACE 3 : INACTIF

→ INTERFACE 2 : 9600 BPS

→ INTERFACE 1 : INACTIF

# FIG.8

b1  b2  b3  b4  b5  b6

→ INTERFACE 5

→ INTERFACE 4

→ INTERFACE 2

# FIG.9

13